# EUROPEAN PATENT SPECIFICATION

(11) **EP 3 377 866 B1**
(45) Date of publication and mention of the grant of the patent: **27.05.2020**
(21) Application number: 16787579.8
(22) Date of filing: 10.08.2016
(51) Int. Cl.: G01K 3/04

(54) **TEMPERATURE INDICATOR FOR THE INDICATION OF TEMPERATURE FLUCTUATIONS OF ITEMS**
TEMPERATURINDIKATOR ZUR ANZEIGE VON TEMPERATURSCHWANKUNGEN VON ELEMENTEN
INDICATEUR DE TEMPÉRATURE POUR INDICATION DE FLUCTUATIONS DE TEMPÉRATURE D'ARTICLES

(30) Priority: 19.11.2015 SI 201500277
(43) Date of publication of application: 26.09.2018
(73) Proprietor: Kemijski Institut, 1000 Ljubljana (SI)
(72) Inventor: KLANJ EK GUNDE, Marta, 1290 Grosuplje (SI); HAJZERI, Metka, 4246 Kamna Gorica (SI); BA NEC, Kristina, 2000 Maribor (SI)
(74) Representative: Jersan, Tatjana
(86) International application number: PCT/SI2016/000019
(87) International publication number: WO 2017/086883

(56) References cited:
- WO-A1-2007/008129
- WO-A2-03/084450
- US-A1- 2015 308 901

## Description

### Field of the Invention

The invention is from the field of detection of temperature changes on the basis of chemical and physical changes in substances. Its application falls within the graphics technology, namely in the realization of so-called smart labels which are an integral part of a smart packaging.

### Description of the Problem

Smart packaging that enables dynamic storage and display of various information on a packed product, has introduced a variety of solutions from the field of printed electronics. They normally require power supply and special devices for reading the written information, such as smart phones having adequate software. These options are an advantage for certain data and for certain participants in this process. However, a strong risk of overlooking the relevant information in every circumstance can occur, even without additional equipment and for all participants. The temperature and particularly the temperature history of items belong to this type of information. The temperature must be clearly visible and recognizable to everyone in all circumstances. Such indication should be implemented by one of the methods for packaging preparation, preferably by methods of graphics technology.

### Prior Art

The problem of indication of temperature and temperature history does not have known solutions that would meet the requirements of smart packaging and could be implemented by using methods of modern graphics technology.

The idea is closest to the sterilization indicator of the company 3M. It is the indicator of the 5^{th} grade used to control success of steam sterilization (3M™ *Comply*™ *Thermalog*™) *Steam Chemical Integrator 2134MM).* Such an indicator is characterized by a line movement achieved within the required time at a defined temperature (for example, 10 minutes at 121°C or 2 minutes at 134°C. This solution significantly differs from the object of this invention by the activation temperature which limits the conditions for the preparation of the indicator and requires the use of different materials. Therefore, the assembly used by *3M Comply Thermalog* is not suitable for indicating temperatures that are below room temperature. The above mentioned version also fails to meet the requirements for smart labels.

An interesting solution is *MonitorMark*™ of the company 3M (*3M*™ *MonitorMark*™ *Time Temperature Indicators*). This is an indicator used for monitoring the temperature and time of the entire supply/delivery chain. It is characterized by a line movement achieved within the required time at a defined temperature. Recommended application is within protective packaging and not directly on a packaged product. The indicator is limited to a rectangular shape. Given the fact that the indicator is relatively thick and not flexible, it cannot be applied on a packaging and does not meet the conditions for a smart label.

The proposed solution is also different from the *Safe-T-Vue* temperature indicator, which is used only to indicate the exceeded temperature but not to record the exposure time above the activation temperature (http://williamlabs.com/products/safe-t-vue/). These indicators also fail to meet the requirements for smart labels.

In the field of patent protection several solutions to temperature indication are known. We will concentrate on the patents which address time-temperature effects (**TTI-time-temperature indicators**) and especially the way, how their activation is carried out. TTI-indication is described by way of (i) two-component/two-part systems, or (ii) special barriers.

Two-component systems consist of two elements that, while applied, are joined on an item normally one on top of another, such that a bottom part is applied first and the upper part is applied on top of the bottom part. When the elements are applied, a protective layer is removed from each one of them. When both elements are joined, this simultaneously means activation of the indicator. These solutions carry out indication through increased transparency or by means of colour change. Transparency can for instance be increased by an identical refractive index of a mobile material and a porous layer (WO 03/025530 A1 *Time-temperature integrating indicator*), or by a viscoelastic substance and a micro structured layer having a well-defined morphology (WO 99/56098: *Time-temperature integrating indicator device with barrier material*). In variants of two-part indicators with a change in colours either indirect thermochromism is applied, where an activator component/developer is present in one part and a temperature sensitive reactant with a colorant in a second part (WO 01/64430 A1: *Activatable time-temperature indicator system*), or temperature-dependent transition of a colorant (together with the substrate substance) from a layer in one part of the indictor to another part, which parts are in direct contact when merged (EP 2728328 A1: *Time-temperature indicator and monitoring method for monitoring quality state of thermally sensitive article*). Quantitative detection of a change in colour is carried out by means of a colorant free reference indicator. In a similar variant of a two-component temperature indicator any number of layers can be applied, said layers regulating actuation of the indicator and extending detection time (EP 0484578 A1: *Multifunctional time-temperature indicator*).

(ii) Solutions with barriers solve a problem of two-component solutions by using barriers that prevent activation of indication before an indicator is applied onto an item and provide for a controlled activation of recording temperature changes, once the indicator has been applied. The simplest example is a removable oxygen-impermeable layer which covers a substrate with a coating of a thermally sensitive material, the colour of which develops at a certain temperature in the presence of oxygen (EP 0231499 A1: *Activatable time-temperature indicator*). Other variants have an active substance reservoir separated from the environment by a barrier; once the barrier is opened, the active substance propagates into the environment of the reservoir. Controlled propagation and detection are carried out with increased transparency of empty micro structured parts of a second reservoir, into which the active fluid flows (US 2003/0214997 A1: *Time or time-temperature indicating articles*). The barrier is opened by being pushed and the migration process into the micro structured part of the indicator is only efficient if the air outlet from the empty parts of the microstructure is opened simultaneously. Another way of detection makes use of a change in colour. In such a variant a reservoir contains a material that liquefies at a certain temperature and is separated by a barrier from an adsorption layer, on which indicator dye is applied. Once the barrier is ultrasonically destroyed or thermally degraded, the active material from the reservoir can flow to the adsorption layer, where coloration occurs. The path length of the active material depends on the temperature and the pathway time (WO 91109287: *Time-temperature indicator*).

The described versions of indicators have drawbacks that are explained herein below and are solved by the present invention in a very elegant way.

Two-component TTI variants mean that two separate elements are available that are joined on an item. Such a variant presents an additional complication at application onto packaging. Since joining of both components also means beginning of indication, this can make preparation of packaging more difficult. The products which are subject to a temperature-controlled chain must be packaged immediately after a two-component indicator is applied. This may prove unfavourable in many instances. Moreover, two-component variants call for relatively thick indicators in several instances (EP 0484578A1).

The beginning of TTI recording is best monitored by barriers that allow beginning of recording only when we want (when the product has been completely packed). Implementation of barriers in the described patents may require complicated structures (EP 0231499 A1) or even discharge of superfluous air (EP 0231499 A1). Activation by ultrasound or increased temperature can also pose a problem and is less practical (WO 91109287).

WO2007/008129 discloses a label having a temperature-monitoring function, as well as a method and equipment for the application of labels to packages for goods.

### Solution to the problem

The temperature indicator of the invention, hereinafter the indicator, is completely feasible by a combination of methods used in graphics technology. All manufacturing methods fall within the scope of graphics technology by making use of lamination, cutting and various printing techniques. An important solution is also a precise realization of a reservoir for an indicator material that allows for precise dosage of same, thus ensuring reproducibility of all variants of the indicator.

The indicator solves a problem of time-temperature indicators - TTI, i. e. indication of temperature fluctuations and recording of time, in which the pre-set activation temperature has been exceeded; where the activation temperature is below room temperature. This indication indirectly provides the user the information on the safety and quality of the product (for example animal food) where such an indicator is used. The indicator records the temperature fluctuations above the activation temperature even if the ambient temperature of the surroundings or the article decreases below the mentioned temperature or in the case when the fluctuations above it repeat again. In the case of such fluctuations we obtain an indication of the total duration of the exceedances of the activation temperature, as each fluctuation above the temperature increases the total effect of the indications. The described effect is possible up to the maximum time interval, called the maximum cumulative time of indication. The indication is unique, determined by a clearly visible colour change that cannot be deleted or otherwise abused. The indicator of the invention is therefore a self-sufficient indicator which does not require any power and the recorded information is readable in all circumstances of visual and/or video detection.

The implementation of the indicator allows the use of flexible substrates, while the product is thin and flexible. Before being activated, the indicator should be cooled in a horizontal position to several °C below the activation temperature; afterwards it can be in a vertical position as well. When activated, the indicator can be already present on the article, so the packaging can be completely prepared separately from product packing and the indicator is activated only when the packed product has entered a cold chain. Activation is initiated once a pull-out tab is removed.

This means that the conditions for smart label and its use in smart packaging of different shapes are met. The assembly of the indicator of the invention is suitable for implementation in the context of graphics technology with customized procedures, which fall within the scope of smart labels (for example vignettes) and security printing.

### Description of the figures

Figure 1: Assembly of embodiment 1 of the indicator.
Figure 2: Assembly of embodiment 2 of the indicator.
Figure 3: Cross-section of embodiments 1 and 2 of the indicator.
Figure 4: Thermal properties of indicator materials #1, #2 and #3.
Figure 5: Path length of indicator materials #1, #2 and #3 by absorption layers from materials A, B and C as a function of temperature of the indicator.
Figure 6: Path length of indicator materials #1, #2 and #3 by absorbing materials A, B, C, as a function of time, measured at room temperature.

### Description of the invention

The object of the invention is a temperature indicator for irreversible recording of exceeding temperature which is below the room temperature, wherein said indicator is completely feasible with methods of graphics technology used for production of smart labels and within security

The temperature indicator is designed to control transport and/or storage of products or substances whose physical, chemical and/or biological properties significantly depend on temperature and time of exceeding the highest permitted temperature, where said temperature is below room temperature. Said temperature is a typical temperature of the indicator and is called the **activation temperature.** This is also a control temperature for items or conditions, which are controlled by the temperature indicator of the invention or the prescribed temperature, at which products need to be maintained according to legislation or manufacturer's regulations.

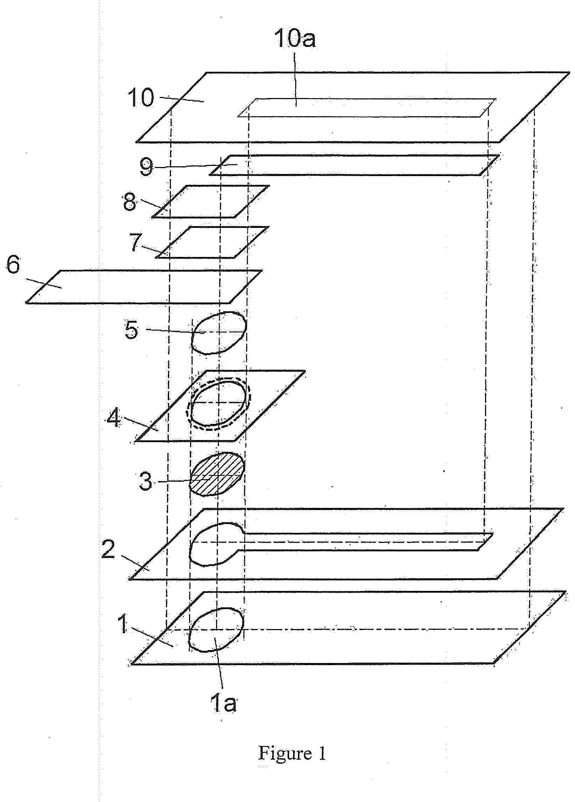

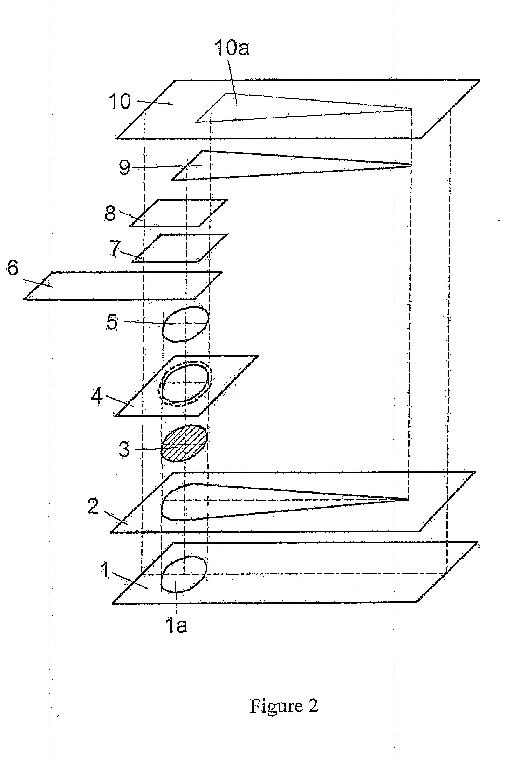

The temperature indicator is shown in Figures 1 and 2 and consists of: a carrier substrate 1 with a conical groove la, a first adhesive layer 2, an indicator material 3, a separation ribbon 4, a second adhesive layer 5, a pull-out tab 6, a third adhesive layer 7, a protective layer 8, an absorption layer 9, and a self-adhesive film 10 with a transparent portion 10a.

The carrier substrate 1, the pull-out tab 6, the protective layer 8 and the self-adhesive film 10 with the transparent portion 10a are formed of a thermoplastic polymer flexible foil such as PET, PI, PVC, PS, PC, PMMA, wherein the foil to be used for the self-adhesive film 10 is printable on at least one side. The thickness of the foil which constitutes the carrier substrate allows formation of a conical groove 1a and is preferably 0.5 mm, the thickness of the foil for the pull-out tab 6 is preferably between 0.1 and 0.25 mm, the thickness of the foil for the protective layer 8 is preferably between 0.1 and 0.25 mm, the thickness of the foil for the self-adhesive film 10 is preferably between 0.1 and 0.3 mm. The selected materials and their thicknesses allow fabrication of a temperature indicator with a combination of methods used for the fabrication of smart labels and in security printing such as: lamination, cutting, application of adhesive layers by coating, and various printing techniques.

The conical groove 1a is formed in the carrier substrate 1 on its upper surface along the edge. The conical groove 1a is formed by known methods of micro transformation of a surface, for instance by micro milling or by using a lamination plate with conical protrusions of a required dimension. Such fabrication method of the conical groove 1a, which is a reservoir for the indicator material 3, provides for a precise and reproducible fabrication of a reservoir, while its shape ensures optimal discharge in case of exceeded activation temperature and consequently maximum exploitation of the indicator. Preparation of the conical groove 1a by modern graphics technology makes it possible to form the conical groove 1a with reproducible dimensions, wherewith precise dosing of the indicator material 3 is ascertained, for instance with spray nozzles directly on the printing line.

A transfer glue or a liquid glue is used for the adhesive layers 2, 5 and 7, which glue is applied by printing such as screen printing, flexo, offset, and dried by an adequate method, e. g. heat, UV. The first adhesive layer 2 is applied in an adequate thickness on the surface of the entire upper side of the carrier substrate 1 with the exception of the groove 1a and the surface covered by the absorption layer 9. The second adhesive layer 5 is applied only on the surface of the perforated portion of the separation ribbon 4. It is herewith ascertained that upon activation of the indicator, i. e. when the pull-out tab 6 is pulled out, the separation ribbon 4 is removed only on the spot corresponding to the position of the conical groove 1a with the indicator material 3. The third adhesive layer 7 is applied onto part of the upper surface of the pull-out tab 6 and equals the surface of the polymer foil of the protective layer 8.

For the indicator material 3 a health-friendly organic solvent could be used or a substance which changes the aggregate state from solid to liquid within the required temperature range, and a conventional dye or a coloured material. Another option is to use thermochromic composites consisting of a dye, a developer and a suitable solvent. The melting point of the applied indicator material determines the activation temperature of the indicator, at which the indicator material starts propagating across the absorption layer 9. The activation temperature of the indicator material is determined by a thermal analysis. The indicator material 3 is applied into the entire volume of the conical groove 1 a in liquid state, for instance with nozzles arranged on a printing line.

The separation ribbon 4 prevents the expansion of the indicator material 3 prior to activation and is preferably an aluminium ribbon perforated up to 1 mm outwards from the edge of the site of the groove 1a. The ribbon can also be made from another material that allows fabrication of a perforation and efficient tearing along said perforation when the ribbon is being pulled out. The thickness of the separation ribbon is preferably between 0.02 and 0.2 mm. The offset of the perforation from the edge of the site of the groove allows activation of the indicator and prevents the propagation of the indicator material in undesired directions.

The absorption layer 9 is made from a paper or synthetic material, for instance a chromatographic paper or filter paper of adequate grades, e. g. Whatman 1, 5, 589/3, 589/1, 674, 615.

The self-adhesive film 10 with the transparent portion 10a is identical in shape and surface to the carrier substrate 1, wherein the surface of the transparent portion 10a is identical in shape and surface to the absorption layer 9. The transparent portion 10a of the self-adhesive film 10 is not imprinted, while the imprint can be present anywhere else.

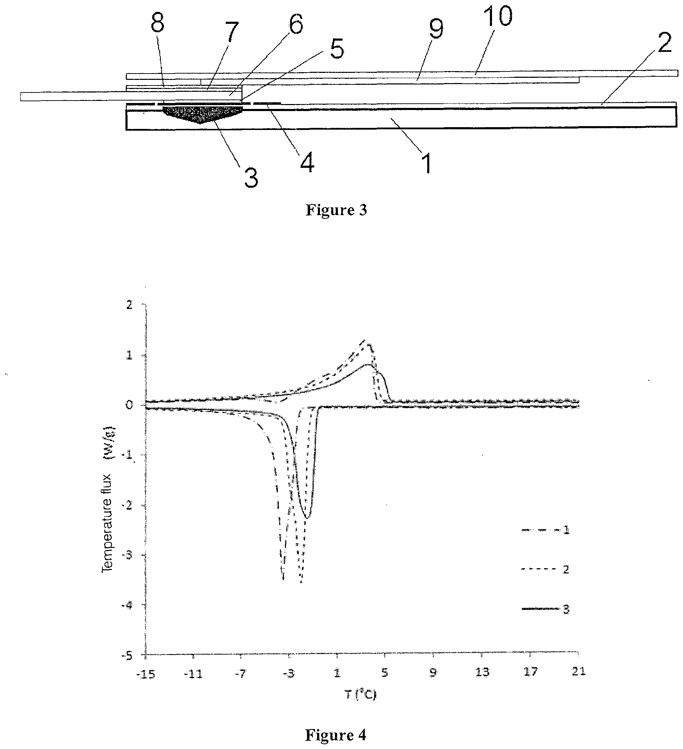

A cross-section of the indicator is shown in Figure 3. The indicator can be of any shape but at least one of the dimensions of the indicator should at least equal the length of the absorption path on the absorption layer 9 which is defined in each case with respect to the selected indicator material 3 and the selected absorption layer 9. Adequate shapes are for instance circle, ellipse, any polygon or any other free shape. In this case, the external edges of the carrier substrate 1, the adhesive layer 2 and the self-adhesive film 10 are identical to the desired shape of the indicator, while the external edges of the separation ribbon 4, the adhesive layer 7 and the protective layer 8 can be adequately adapted to the edges of the selected shape.

The shape and dimensions of the absorption layer 9 and of the transparent portion 10a depend on the length of the absorption path which is determined in each case as a function of the selected indicator material 3. In fact, the length must at least equal the length of the absorption path which is determined on the basis of the selected indicator material 3 and the selected absorption layer 9.

Prior to use, i.e. before the activation of the indicator it is necessary to cool it for at least some °C below the prescribed temperature - it should be put for at least 1 hour in the horizontal position so that the carrier substrate 1 is on the bottom. In such conditions, the indicator material 3 changes the aggregate state to solid and only insignificantly adheres to the separation ribbon 4. While the indicator is cooled, its bottom side must be on the bottom otherwise the indicator material 3 adheres to the separation ribbon 4 and when the pull-out tab 6 is pulled out, the latter pulls out some indicator material 3 as well and this impacts the quantitative effect of indication - the time, in which the indicator is active can get considerably reduced. The indicator so cooled is attached to an item in the cold chain, for instance a packaging, and activated by pulling the pull-out tab 6 for activation; the perforated portion of the separation ribbon 4 and the protective layer 8 are removed together with adhesive layers 5 and 7. After extraction the indicator should be stroked by hand on the spots where the layers have been pulled out, so that the self-adhesive film 10 also fixes to the separation ribbon 4 on pull-out sites. This ensures avoiding any loss of indicator material 3 during liquefaction, which assures quantitative proper functioning of the indicator.

The colour change is caused by rise or by fall in temperature in the vicinity of the indicator, which causes a change in physical appearance of the indicator material 3, preferably the aggregate state of the indicator material 3 changes from solid to liquid, and its path through the absorption layer 9. The propagation speed and the path length of the indicator material 3 on the absorption layer 9 may vary by the indicator material 3 type or with its rheological properties and by the properties of the absorption layer 9 such as hydrophilicity/hydrophobicity, porosity, size and distribution of pores, roughness and grammage.

The indicator materials 3 are prepared according to the desired activation temperature which is lower than the temperature used in the preparation of the indicator, and with a different colour response, even a response that can be detected through surveillance cameras, while the latter can operate also outside of the visible light spectre. The indicator allows implementation of various graphic designs which also allow transmission of functional (instructions, explanations) and commercial information.

Prior to fabrication of the indicator in a production line, the indicator material 3 needs to be selected or prepared with respect to the desired activation temperature and with respect to final use, in particular to possible non-tolerance to toxicity and specific optical requirements for detecting colour change. The selected absorption layer 9 must be compatible with the indicator material 3 and must provide for adequate absorption, stability and functionality of the same.

Each functional requirement of the indicator material is subject to basic testing of thermal properties of the indicator material 3 and the length of the absorption path of the indicator material 3 across the absorption layer 9 as a function of temperature and time.

Figures 4, 5 and 6 show the results of testing properties of various temperature indicators, made with three indicator materials 3, namely the composites #1, #2 and #3 and with three different absorption materials A, B, C.

Figure 4 shows thermal properties of indicator materials #1, #2 and #3. Materials #1 and #2 practically have identical activation temperature yet a different solidification temperature. Material #3 has a somewhat higher activation temperature and solidification temperature than the remaining two materials and needs a somewhat smaller temperature flux (energy) for activation than the other two.

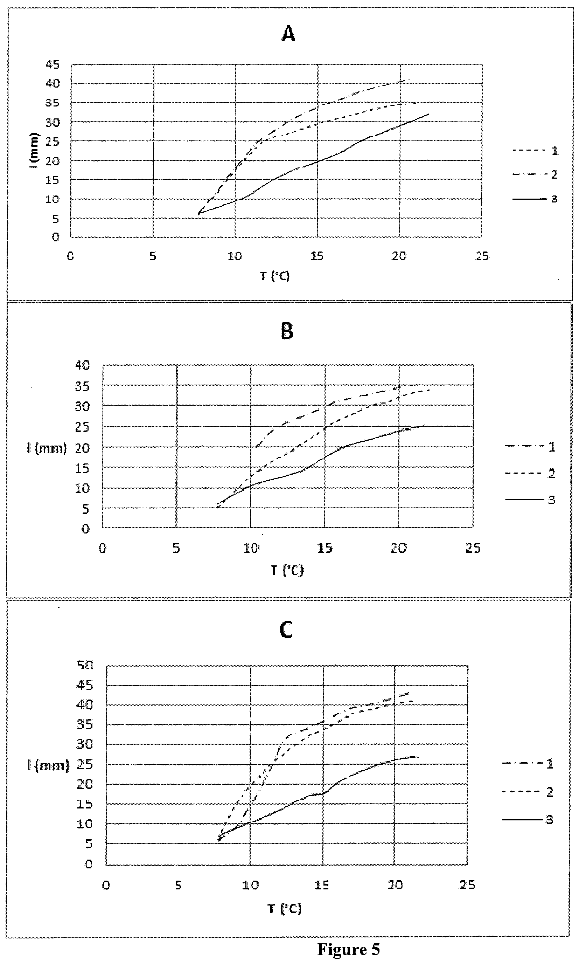

Figure 5 shows the path lengths of absorbed indicator materials #1, #2 and #3 by absorption layers from material A, B and C as a function of the indicator temperature. The embodiments are valid for detecting a response of an indicator that was activated at 5°C and then transferred to room temperature and as a result exposed to heating up to room temperature. The example shows co-dependence in response of the indicator and the indicator and absorption materials.

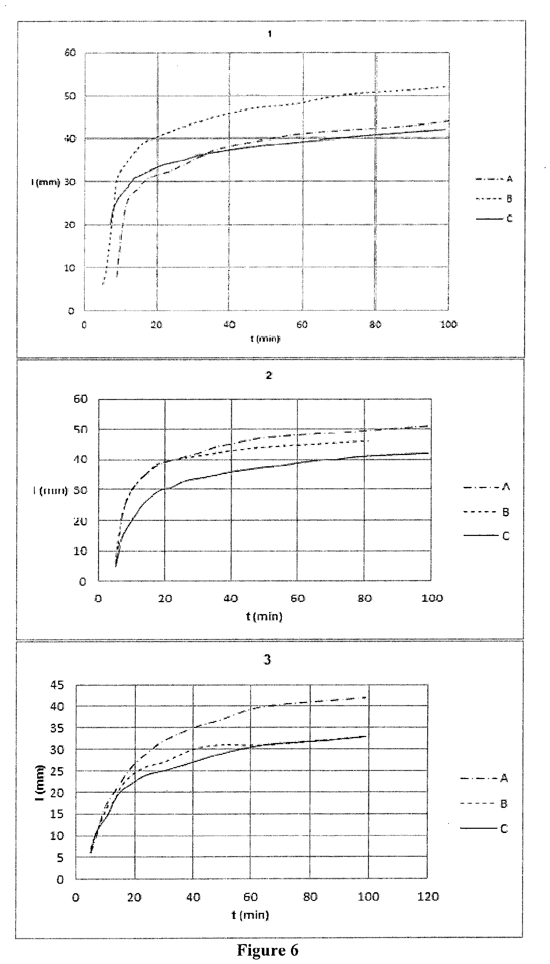

Figure 6 shows the path lengths of indicator materials #1, #2 and #3 by absorption materials A, B, C as a function of the time measured at room temperature. The embodiments are valid for a response of an indicator that is taken from a cool room (in this case < 0°C) and exposed to room temperature.

The layers, of which the temperature indicator consists, allow that an appropriate amount of indicator material is applied on the substrate material and can be activated with a specific procedure, wherein the indicator material irreversibly propagates across the absorption layer and causes a clearly visible change on the surface of the indicator. The indicator is covered by a protection film which could contain printed instructions and any commercial messages, except on the place of the absorption layer where it should remain transparent. None of the indicator layers must affect the chemical and physical properties of the indicator material. All layers, of which the indicator is comprised, must be resistant to conditions, to which the indicator is exposed: low temperatures, increased humidity, light.

The assembly and the selected materials for the indicator allow mass-production in printing technology at a temperature of the production line. This means that temperature control of the production line of the indicator is not required. The indicator can be produced anywhere with adequate graphics technology and applied on an adequate spot on the packaging. Completely produced packaging is delivered in any temperature conditions to a packing site. Before packed, the packaging with the applied indicator is cooled in a horizontal position, such that the carrier substrate 1 of the indicator is on the bottom. Once the indicator is cooled, the packaging is assembled, for instance to a box, and filled with a product. The indicator is activated when the packed product exits the packaging place in the cool chain. When activated, the cooled indicator can be in any position within the packaging. The described mode of application of the temperature indicator makes it possible to prepare the packaging completely independently on product packing and can therefore be prepared anywhere.

The indicator enables recording of time, in which the temperature of the item, on which the indicator was applied, was above its activation temperature which is below room temperature. The indication of exceeded said temperature is unique, simple, and irreversible and cannot be erases. The indicator also enables additive indication of exceeded time, in which the allowed temperature was exceeded, if this time is reasonably long (cumulative indicating time). If the active material is a thermochromic composite, the indicator has a further property since it indicates with a colour change whether the current temperature is below or above the activation temperature also after the time exceeds the cumulative indicating time.

The precision of temperature indicator for the cold chain is ± 3°C. By indicating the actual temperature of items in the cold chain, it is necessary to take into account also thermal conductivity of packaging materials. Apart from that, regulations concerning the maintenance of products and allowed exceeded temperature/deviation of the temperature for a certain period of time need to be taken into account as well.

The proposed invention solves the described problem and has typical advantages over the prior patents in this field by:
(a) implementation - allows use of a flexible substrate, while the product is thin and flexible;
(b) preparation is customized to graphics technology and can be combined with procedures of lamination, cutting and printing;
(c) precise formation of a reservoir for the indicator material provides for precise dosing of this material and this allows fabrication of indicators with maximal possible repeatability of operation;
(d) prior to activation, the temperature indicator must be cooled in horizontal position to several °C below activation temperature and can be positioned afterwards in any position, even vertical;
(e) upon activation, the temperature indicator can already be present on the item or packaging and activation is done by pulling out the pull-out tab. This means that the packaging can be completely produced separately from product packing and the indicator can be activated only when the packed product is within the temperature controlled environment;
(f) target activation temperature is below the temperature, at which the production of the indicator takes place on the production line. Closest existing related patents indicate heating of the articles above room temperature (or similarly, above their production temperature) their implementation is significantly more expensive than ours and does not meet the basic requirements for smart labels;
(g) the temperature indicator allows indication of exceeded cumulative time even after the first excess of the activation temperature and cooling below it;
(h) possibility to use recyclable and harmless materials.

The invention is illustrated by but not limited to embodiments.

### Embodiments

Embodiment 1 is shown in Figure 1 and Figure 3.

The indicator consists of ten layers as follows:
A carrier substrate 1 with a conical groove 1a is formed of a polycarbonate foil of a thickness of 0.5 mm and dimensions: length 7 cm, width 2 cm. The conical groove 1a is formed by a micro milling cutter, wherein the diameter of the groove is 1 cm and the depth of the groove is 0.3 mm. The conical groove 1a is formed on the upper surface of the carrier substrate 1, 0.5 cm from its left edge, 0.5 cm from its bottom edge, and 0.5 cm from its top edge.

An adhesive layer 2 is a layer of liquid glue which is applied at a thickness of 0.03 mm onto a surface of the entire upper side of the carrier substrate 1 except on the site of the conical groove 1a and the surface covered by an absorption layer 9 by flexo printing and oxidatively dried.

An indicator material 3 is a thermochromic composite based on the leuco dye crystal violet lactone (CVL) applied into the total volume of the conical groove 1a in liquid form by nozzles arranged in the printing line.

A separation ribbon 4 is an aluminium ribbon of a length of 2 cm, width 2 cm, thickness of 0.023 mm and is perforated 1 mm outside the edge of the conical groove 1a and applied at the left side of the carrier substrate 1.

An adhesive layer 5 is a layer of liquid glue applied in a thickness of 0.03 mm on the upper surface of the separation ribbon 4 only on the surface of the conical groove 1a by flexo printing and oxidatively dried.

A pull-out tab 6 is made from a PET fiol of a thickness of 0.15 mm and dimensions: width 1 cm, length 4 cm. The right side of the pull-out tab 6 is positioned in a way to completely cover the surface of the adhesive layer 5 1.5 cm from the left edge of the carrier substrate 1, 0.5 cm from its bottom edge, 0.5 cm from its top edge.

An adhesive layer 7 is a layer of liquid glue applied at a thickness of 0.03 mm and with dimensions: width 1 cm, length 1.5 cm, onto the upper surface of the pull-out tab 6 to its right side by flexo printing and oxidatively dried.

A protective layer 8 is made from a PET foil of a thickness of 0.1 mm of dimensions: width 2 cm and length 1.5 cm. It is applied at the beginning of the left side of the carrier substrate 1, such that it completely covers the surface of the adhesive layer 7.

An absorption layer 9 is made from a cellulose chromatography paper No. 232-674-9 (Macherey-Nagel GmbH & Co. KG) and having dimensions: width 0.5 cm and length 5 cm. It is applied 1 cm from the left edge of the carrier substrate 1, 7.5 mm from its top edge (1), and 7.5 mm from its bottom edge.

A self-adhesive film 10 with a transparent portion 10a is made from a transparent polycarbonate foil of a thickness of 0.15 mm, one-side printable. The dimensions of the self-adhesive film 10 are identical to the dimensions of the carrier substrate 1.

The transparent portion 10a of the self-adhesive film 10 is located 2 cm from the left edge of the carrier substrate 1, 8 mm from the bottom of the carrier substrate 1, 8 mm from the top edge of the carrier substrate 1, a length of 4 cm.

No printing is allowed on the transparent portion but it can be elsewhere.

Embodiment 2 is shown in Figure 2 and Figure 3.

The indicator consists of identical layers and in the same way as in Embodiment 1. The shape of the absorption layer 9 and of the transparent portion 10a of the self-adhesive film 10 is changed and so is the material, from which the absorption layer 9 is made.

The absorption layer 9 is made from a filter paper Whatman of grade 1 and has a shape of an equilateral triangle with a basis of 1 cm and a height of 5 cm. The shape of the transparent portion 10a of the self-adhesive film 10 is adapted to the shape of the absorption layer 9.

## Claims

1. A temperature indicator for indicating temperature fluctuations of items above a prescribed limit in a cold chain, wherein the temperature indicator is completely feasible by a combination of methods used in graphics technology, wherein the temperature indicator consists of a carrier substrate (1) with a conical groove (1a), in which an indicator material (3) is present, said material being below activation temperature while in solid state and changing its aggregate state at activation temperature, a first adhesive layer (2) applied onto a surface of the entire upper side of the carrier substrate (1) except on the site of the conical groove (1a) and the surface covered by an absorption layer (9), a separation ribbon (4) applied on the indicator material (3) being in its solid state, a second adhesive layer (5) applied on the upper surface of the separation ribbon (4) only on the surface of the conical groove (1a) and of the indicator material (3) being in its solid state, a pull-out tab (6) positioned in a way to completely cover the surface of the adhesive layer (5), a third adhesive layer (7) applied onto a part of the upper surface of the pull-out tab (6), a protective layer (8) applied on the upper surface of the adhesive layer (7) to completely cover the surface of the adhesive layer (7), an absorption layer (9) which is in contact with the upper side of the carrier substrate (1) and in which the indicator material (3) propagates, and a self-adhesive film (10) with a transparent portion (10a) as the upper layer of the final temperature indicator, for optical tracking of exceeded activation temperature, wherein the pull-out tab (6) with the separation ribbon (4), the protective layer (8) and adhesive layers (5, 7) prevent a contact between the indicator material (3) and the absorption layer (9) prior to activation of the indicator, and the carrier substrate (1), the pull-out tab (6), the protective layer (8) and the self-adhesive film (10) with the transparent portion (10a) are formed of a flexible foil.

2. The temperature indicator according to claim 1 **characterized in that** the thickness of the flexible foil of the carrier substrate (1) is preferably 0.5 mm.

3. The temperature indicator according to claims 1 and 2 **characterized in that** the indicator material (3) is a coloured material or a thermochromic composite that changes its aggregate state at activation temperature, wherein the indicator material (3) is determined in each case according to the desired activation temperature and final application.

4. The temperature indicator according to claim 3 **characterized in that** the change in the aggregate state of the indicator material (3) is from solid to liquid, wherein the melting point of the indicator material (3) determines the activation temperature of the indicator, at which the indicator material starts propagating across the absorption layer (9).

5. The temperature indicator according to preceding claims **characterized in that** the separation ribbon (4) is formed of an aluminium ribbon perforated up to 1 mm outwards from the edge of a site of the conical groove (1a).

6. The temperature indicator according to preceding claims **characterized in that** the absorption layer (9) is formed of a paper or synthetic material and compatible with the indicator material (3), and that the dimensions of the absorption layer (9) are defined by the length of the absorption path which is determined in each case as a function of the selected indicator material (3) and the selected absorption layer (9), wherein the length of the absorption layer (9) is at least identical to the length of the absorption path.

7. The temperature indicator according to preceding claims **characterized in that** the adhesive layer (2) is applied for contacting the carrier substrate (1), the separation ribbon (4) and the self-adhesive film (10), and the self-adhesive film (10) with the transparent portion (10a) is identical in shape and surface to the carrier substrate (1), wherein the surface of the transparent portion (10a) is identical in shape and surface to the absorption layer (9).

8. The temperature indicator according to preceding claims **characterized in that** the conical groove (1a) is inserted into the carrier substrate (1) with repeatable dimensions by micro processing methods or by lamination panels, and that the indicator material (3) is dosed into the conical groove (1a) by way of spray nozzles directly on a printing line.

9. The temperature indicator according to preceding claims **characterized by** being activated by pulling the pull-out tab (6), where with the perforated part of the separation ribbon (4) and the protective layer (8) are removed together with the adhesive layers (5) and (7).

10. The temperature indicator according to preceding claims **characterized in that** the layers, of which the indicator is composed, with the exception of the indicator material (3), are resistant to conditions, to which the indicator is exposed, and that none of the layers impacts the chemical and physical properties of the indicator material (3) and the absorption layer (9).

11. The temperature indicator according to preceding claims **characterized in that** the indicator may be of any shape, wherein the external edges of the carrier substrate (1), the adhesive layer (2) and the self-adhesive film (10) are identical to the selected shape of the indicator, while the external edges of the separation ribbon (4), the adhesive layer (7) and the protective layer (8) are adapted to the edges of the selected shape, and that at least one of the dimensions of the indicator is at least identical to the length of the absorption path which is determined each time as a function of the selected indicator material (3) and consequently the length of the absorption layer (9).

12. A method for production of the temperature indicator according to claims 1 to 11 wherein it is produced by methods for the production of smart labels and in protective printing at a temperature of a production line, and that prior to use the indicator is cooled for at least one hour to several °C below the activation temperature in a horizontal position, such that the carrier substrate (1) is on the bottom side.

13. A use of the temperature indicator according to claims 1 to 11 wherein the indicator is applied to any surface at a temperature above the activation temperature, after the indicator has been cooled to a temperature below the activation temperature in horizontal position according to claim 12, the indicator can be in any position and is activated by pulling out the pull-out tab (6).

## Patentansprüche

1. Temperaturindikator zur Anzeige von Temperaturschwankungen, die die vorgegebene Obergrenze in einer Kühlkette von Waren, übersteigen, wobei der Temperaturindikator durch eine Kombination von, in der Grafiktechnologie verwendeten Verfahren, vollständig durchführbar ist, wobei der Temperaturindikator aus einem Trägersubstrat (1) mit einer konischen Nut (1a), in der ein Indikatormaterial (3) vorhanden ist, das im festen Zustand unterhalb der Aktivierungstemperatur liegt und seinen Aggregatzustand bei einer Aktivierungstemperatur verändert, aus einer ersten Klebstoffschicht (2), die auf einer Oberfläche der gesamten Oberseite des Trägersubstrats (1), mit Ausnahme der konischen Nut (1a) und der, durch eine Absorptionsschicht (9) bedeckten Oberfläche angebracht ist, einem, auf dem Trägersubstrat (1) angebrachten Trennband (4), einer zweiten, auf der oberen Oberfläche des Trennbandes (4) nur auf der Oberfläche der konischen Nut (1a) angebrachten Klebstoffschicht (5), einer Ausziehlasche (6), die derart positioniert ist, dass sie die Oberfläche der Klebstoffschicht (5) vollständig bedeckt, einer dritten, auf einem Teil der Oberseite der Ausziehlasche (6) angebrachten Klebstoffschicht (7), einer, auf der Oberseite der Klebeschicht (7) angebrachten Schutzschicht (8), die die Oberfläche der Klebeschicht (7) vollständig bedeckt, einer Absorptionsschicht (9), die mit der Oberseite des Trägersubstrats (1) in Kontakt kommt und in der sich das Indikatormaterial (3) ausbreitet, und einer Selbstklebefolie (10) mit einem transparenten Abschnitt (10a) als Endschicht des Temperaturindikators zur optischen Erkennung der Überschreitung der Aktivierungstemperatur, besteht, wobei die Ausziehlasche (6) mit dem Trennband (4), der Schutzschicht (8) und den Klebeschichten (5, 7) vor der Aktivierung des Indikators einen Kontakt zwischen dem Indikatormaterial (3) und der Absorptionsschicht (9) verhindern und das Trägersubstrat (1), die Ausziehlasche (6), die Schutzschicht (8) und die Selbstklebefolie (10) mit dem transparenten Abschnitt (10a) aus einer flexiblen Folie gebildet sind.

2. Temperaturindikator nach Anspruch 1, **dadurch gekennzeichnet, dass** die Dicke der flexiblen Folie des Trägersubstrats (1) vorzugsweise 0,5 mm beträgt.

3. Temperaturindikator nach Anspruch 1 und 2, **dadurch gekennzeichnet, dass** das Indikatormaterial (3) ein farbiges Material oder ein thermochromer Verbund ist, der seinen Aggregatzustand bei einer Aktivierungstemperatur verändert, wobei das Indikatormaterial (3) jeweils in Abhängigkeit von der gewünschten Aktivierungstemperatur und Endanwendung bestimmt wird.

4. Temperaturindikator nach Anspruch 3, **dadurch gekennzeichnet, dass** die Änderung des Aggregatzustands des Indikatormaterials (3) von fest zu flüssig ist, wobei der Schmelzpunkt des Indikatormaterials (3) die Aktivierungstemperatur des Indikators bestimmt, bei der sich das Indikatormaterial über die Absorptionsschicht (9) hinaus ausbreitet.

5. Temperaturindikator nach den vorhergehenden Ansprüchen, **dadurch gekennzeichnet, dass** das Trennband (4) aus einem, bis zu 1 mm vom Rand einer Stelle der konischen Nut (1a) nach außen perforierten Aluminiumband gebildet ist.

6. Temperaturindikator nach den vorhergehenden Ansprüchen, **dadurch gekennzeichnet, dass** die Absorptionsschicht (9) aus Papier oder Kunststoff gebildet ist und mit dem Indikatormaterial (3) kompatibel ist, und dass die Abmessungen der Absorptionsschicht (9) durch die Länge des Absorptionspfads definiert sind, die jeweils in Abhängigkeit von dem ausgewählten Indikatormaterial (3) und der ausgewählten Absorptionsschicht (9) bestimmt wird, wobei die Länge der Absorptionsschicht (9) zumindest der Länge des Absorptionspfads entspricht.

7. Temperaturindikator nach den vorhergehenden Ansprüchen, **dadurch gekennzeichnet, dass** die Klebeschicht (2) zur Kontaktierung des Trägersubstrats (1), des Trennbandes (4) und der Selbstklebefolie (10) aufgebracht ist und die Selbstklebefolie (10) mit dem transparenten Abschnitt (10a) in Form und Oberfläche identisch mit dem Trägersubstrat (1) ist, wobei die Oberfläche des transparenten Abschnitts (10a) in Form und Oberfläche der Absorptionsschicht (9) entspricht.

8. Temperaturindikator nach den vorhergehenden Ansprüchen, **dadurch gekennzeichnet, dass** die konische Nut (1a) mit gleichmäßigen Abmessungen durch Mikroverarbeitungsverfahren oder durch Laminierplatten in das Trägersubstrat (1) eingesetzt ist und dass das Indikatormaterial (3) über Sprühdüsen direkt auf einer Drucklinie in die konische Nut (1a) hineindosiert wird.

9. Temperaturindikator nach den vorhergehenden Ansprüchen, **dadurch gekennzeichnet, dass** er durch Ziehen der Ausziehlasche (6) aktiviert wird, wodurch der perforierte Teil des Trennbands (4) und die Schutzschicht (8), zusammen mit den Klebeschichten (5) und (7) entfernt werden.

10. Temperaturindikator nach den vorhergehenden Ansprüchen, **dadurch gekennzeichnet, dass** die Schichten, aus denen der Indikator, mit Ausnahme des Indikatormaterials (3), zusammengesetzt ist, gegenüber Bedingungen beständig sind, denen der Indikator ausgesetzt ist, und dass keine der Schichten die chemischen und physikalischen Eigenschaften des Indikatormaterials (3) und der Absorptionsschicht (9) beeinflusst.

11. Temperaturindikator nach den vorhergehenden Ansprüchen, **dadurch gekennzeichnet, dass** der Indikator eine beliebige Form aufweisen kann, wobei die Außenkanten des Trägersubstrats (1), der Klebeschicht (2) und der Selbstklebefolie (10) gleich der gewählten Form des Indikators sind, während die Außenkanten des Trennbandes (4), der Klebeschicht (7) und der Schutzschicht (8) an die Kanten der ausgewählten Form angepasst sind, und dass mindestens eine der Abmessungen des Indikators zumindest der Länge des Absorptionspfads entspricht, die jeweils in Abhängigkeit von dem ausgewählten Indikatormaterial (3) und folglich der Länge der Absorptionsschicht (9) bestimmt wird.

12. Verfahren zur Herstellung des Temperaturindikators nach den Ansprüchen 1 bis 11, **dadurch gekennzeichnet, dass** es durch Verfahren zur Herstellung intelligenter Etiketten und beim Schutzdruck, bei einer Temperatur einer Produktionslinie hergestellt wird, und dass der Indikator vor der Verwendung für mindestens eine Stunde auf mehrere °C unterhalb der Aktivierungstemperatur in einer horizontalen Position abgekühlt wird, so dass sich das Trägersubstrat (1) auf der Unterseite befindet.

13. Verwendung des Temperaturindikators nach den Ansprüchen 1 bis 11, wobei der Indikator auf eine beliebige Oberfläche bei einer Temperatur oberhalb der Aktivierungstemperatur aufgebracht wird, nachdem der Indikator auf eine Temperatur unterhalb der Aktivierungstemperatur in horizontaler Position gemäß Anspruch 12 abgekühlt worden ist, wobei der Indikator in jeder Position sein kann und durch Herausziehen der Ausziehlasche (6) aktiviert wird.

## Revendications

1. Indicateur de température pour indication des fluctuations de températures d'articles au-dessus d'une limite prescrite dans une chaîne du froid, l'indicateur de température étant entièrement réalisable par une combinaison de procédés utilisés dans la technologie graphique, l'indicateur de température étant constitué d'un substrat de support (1) pourvu d'une rainure conique (la), dans laquelle se trouve un matériau indicateur (3), ledit matériau étant à une température inférieure à la température d'activation tout en étant à l'état solide et changeant son état d'agrégation à la température d'activation, une première couche adhésive (2) appliquée sur une surface de l'ensemble du côté supérieur du substrat de support (1) sauf sur le site de la rainure conique (1a) et la surface recouverte par une couche d'absorption (9), un ruban de séparation (4) appliqué sur le substrat de support (1), une deuxième couche adhésive (5) appliquée sur la surface supérieure du ruban de séparation (4) uniquement sur la surface de la rainure conique (la), une languette pouvant être tirée (6) positionnée de manière à recouvrir complètement la surface de la couche adhésive (5), une troisième couche adhésive (7) appliquée sur une partie de la surface supérieure de la languette pouvant être tirée (6), une couche de protection (8) appliquée sur la surface supérieure de la couche adhésive (7) pour recouvrir complètement la surface de la couche adhésive (7), une couche d'absorption (9) qui est en contact avec le côté supérieur du substrat de support (1) et dans laquelle le matériau indicateur (3) se propage, et un film auto-adhésif (10) avec une partie transparente (10a) en tant que couche finale de l'indicateur de température, pour le suivi optique de la température d'activation dépassée, la languette pouvant être tirée (6) avec le ruban de séparation (4), la couche de protection (8) et les couches adhésives (5, 7) empêchant un contact entre le matériau indicateur (3) et la couche d'absorption (9) avant l'activation de l'indicateur, et le substrat de support (1), la languette pouvant être tirée (6), la couche de protection (8) et le film auto-adhésif (10) avec la partie transparente (10a) étant formés d'un film souple.

2. Indicateur de température selon la revendication 1, **caractérisé en ce que** l'épaisseur du film souple du substrat de support (1) est de préférence de 0,5 mm.

3. Indicateur de température selon les revendications 1 et 2, **caractérisé en ce que** le matériau indicateur (3) est un matériau coloré ou un composite thermochromique qui change son état d'agrégation à une température d'activation, le matériau indicateur (3) étant déterminé dans chaque cas en fonction de la température d'activation souhaitée et de l'application finale.

4. Indicateur de température selon la revendication 3, **caractérisé en ce que** le changement de l'état d'agrégation du matériau indicateur (3) est de solide à liquide, le point de fusion du matériau indicateur (3) déterminant la température d'activation de l'indicateur, à laquelle le matériau indicateur commence à se propager à travers la couche d'absorption (9).

5. Indicateur de température selon les revendications précédentes, **caractérisé en ce que** le ruban de séparation (4) est formé d'un ruban d'aluminium perforé jusqu'à 1 mm vers l'extérieur à partir du bord d'un site de la rainure conique (1a).

6. Indicateur de température selon les revendications précédentes, **caractérisé en ce que** la couche d'absorption (9) est formée d'un papier ou d'un matériau synthétique et compatible avec le matériau indicateur (3), et **en ce que** les dimensions de la couche d'absorption (9) sont définies par la longueur du parcours d'absorption qui est déterminée dans chaque cas en fonction du matériau indicateur sélectionné (3) et de la couche d'absorption sélectionnée (9), la longueur de la couche d'absorption (9) étant au moins identique à la longueur du parcours d'absorption.

7. Indicateur de température selon les revendications précédentes, **caractérisé en ce que** la couche adhésive (2) est appliquée pour être en contact avec le substrat de support (1), le ruban de séparation (4) et le film auto-adhésif (10), et le film auto-adhésif (10) avec la partie transparente (10a) présente une forme et une surface identiques au substrat de support (1), la surface de la partie transparente (10a) présentant une forme et une surface identiques à la couche d'absorption (9).

8. Indicateur de température selon les revendications précédentes, **caractérisé en ce que** la rainure conique (1a) est insérée dans le substrat de support (1) avec des dimensions reproductibles par des procédés de micro-traitement ou par des panneaux de stratification, et **en ce que** le matériau indicateur (3) est dosé dans la rainure conique (1a) au moyen de buses de pulvérisation directement sur une ligne d'impression.

9. Indicateur de température selon les revendications précédentes, **caractérisé en ce qu'**il est activé par traction de la languette pouvant être tirée (6), où la partie perforée du ruban de séparation (4) et la couche de protection (8) sont retirées conjointement avec les couches adhésives (5) et (7).

10. Indicateur de température selon les revendications précédentes, **caractérisé en ce que** les couches, dont l'indicateur est composé, à l'exception du matériau indicateur (3), sont résistantes aux conditions auxquelles l'indicateur est exposé, et qu'aucune des couches n'impacte les propriétés chimiques et physiques du matériau indicateur (3) et de la couche d'absorption (9).

11. Indicateur de température selon les revendications précédentes, **caractérisé en ce que** l'indicateur peut être de n'importe quelle forme, les bords externes du substrat de support (1), la couche adhésive (2) et le film auto-adhésif (10) sont identiques à la forme sélectionnée de l'indicateur, tandis que les bords externes du ruban de séparation (4), de la couche adhésive (7) et de la couche de protection (8) sont adaptés aux bords de la forme sélectionnée, et qu'au moins l'une des dimensions de l'indicateur est au moins identique à la longueur du parcours d'absorption qui est déterminé chaque fois en fonction du matériau indicateur sélectionné (3) et par conséquent de la longueur de la couche d'absorption (9).

12. Procédé de fabrication de l'indicateur de température selon les revendications 1 à 11, dans lequel il est produit par des procédés de production d'étiquettes intelligentes et en impression de protection à une température de ligne de production, et qui, avant utilisation, est refroidi pendant au moins une heure à plusieurs °C au-dessous de la température d'activation dans une position horizontale, de telle sorte que le substrat de support (1) se trouve sur le côté inférieur.

13. Utilisation de l'indicateur de température selon les revendications 1 à 11, l'indicateur étant appliqué à n'importe quelle surface à une température supérieure à la température d'activation, après que l'indicateur a été refroidi à une température inférieure à la température d'activation en position horizontale selon la revendication 12, l'indicateur peut être dans n'importe quelle position et est activé par traction de la languette pouvant être tirée (6).
